# EUROPEAN PATENT SPECIFICATION

(11) **EP 2 597 830 B1**
(45) Date of publication and mention of the grant of the patent: **19.02.2014**
(21) Application number: 12193317.0
(22) Date of filing: 20.11.2012
(51) Int. Cl.: H04L 12/703, H04L 12/721

(54) **Method, router bridge, and system for trill network protection**
Verfahren, Routerbrücke und System für TRILL-Netzwerkschutz
Procédé, routeur passerelle et système de protection de réseau trill

(30) Priority: 23.11.2011 CN 201110375693
(43) Date of publication of application: 29.05.2013
(73) Proprietor: Huawei Technologies Co., Ltd., Longgang District, Shenzhen Guangdong 518129 (CN)
(72) Inventor: Qi, Hao, Shenzhen Guangdong 518129 (CN); Xie, Ying, Shenzhen Guangdong 518129 (CN); Zhang, Yan, Shenzhen Guangdong 518129 (CN); Wu, Guangrui, Shenzhen Guangdong 518129 (CN); Luo, Yinwei, Shenzhen Guangdong 518129 (CN)
(74) Representative: Thun, Clemens

(56) References cited:
- US-A1- 2011 235 523
- RADIA PERLMAN INTEL LABS DONALD EASTLAKE HUAWEI ANOOP GHANWANI BROCADE HONGJUN ZHAI: "RBridges: Multilevel TRILL; draft-perlman-trill-rbridge-multilevel-03. txt", RBRIDGES: MULTILEVEL TRILL; DRAFT-PERLMAN-TRILL-RBRIDGE-MULTILEVEL-03. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1 November 2011 (2011-11-01), pages 1-23, XP015079339, [retrieved on 2011-11-01]
- ZHAI F HU ZTE CORPORATION H: "Extending the Virtual Router Redundancy Protocol for TRILL campus; draft-hu-trill-rbridge-vrrp-01.txt", EXTENDING THE VIRTUAL ROUTER REDUNDANCY PROTOCOL FOR TRILL CAMPUS; DRAFT-HU-TRILL-RBRIDGE-VRRP-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 23 June 2011 (2011-06-23), pages 1-12, XP015076587, [retrieved on 2011-06-23]

## Description

### FIELD OF THE INVENTION

The present invention relates to the field of network communications, and in particular, to a method, a router bridge, and a system for TRILL network protection.

### BACKGROUND OF THE INVENTION

A switch in a transparent interconnection of lots of links (Transparent Interconnection of Lots of Links, abbreviated as TRILL) network has a layer-2 forwarding function and a layer-3 routing function at the same time, and is usually referred to as a router bridge (Router Bridge or RBridges, abbreviated as RB). The TRILL runs over a data link layer (Data Link Layer), namely layer-2 of an open system interconnection (Open System Interconnection, abbreviated as OSI) reference model, and applies a link state routing technology to the data link layer without interfering with the work of an upper layer router.

In the TRILL network, the RB runs an intermediate system to intermediate system (Intermediate system to intermediate system, IS-IS) protocol to broadcast connection information to all RBs, and therefore each RB can learn about other RBs in the network and connection relationships among the RBs. The RB has sufficient information to calculate an optimal path of unicast to any network node, and may calculate a multicast distribution tree for unicast, multicast, or broadcast with an unknown destination address.

The RB in the TRILL network calculates the multicast distribution tree according to a same root RB. If the root RB of the multicast distribution tree is faulty, all nodes in the network need to recalculate a multicast distribution tree according to a new root RB, where the amount of calculation is relatively large and the time for fault recovery is long, thereby causing a service interruption, and affecting the performance of the TRILL network.

A draft "RBridges: Multilevel TRILL; draft-perlman-trill-rbridge-multilevel-03.txt" (1 November, 2011) of Internet Engineering Task Force (IETF) describes issues and compares advantages and disadvantages of various possible approaches to extending TRILL to use multiple levels of IS-IS. Specifically, the draft discloses using multiple levels of a link state routing protocol for fixing TRILL stability issues.

### SUMMARY OF THE INVENTION

The present invention provide a method, a router bridge, and a system for TRILL network protection, so as to solve the problem that when a root RB node in an TRILL network is faulty, a long time for fault recovery causes a service interruption and affects network performance.

In a first aspect, the present invention provides a method for Transparent Interconnection of Lots of Links TRILL network protection, includes:
negotiating, by a first router bridge RB, with a second RB about an active/standby state, where the first RB and the second RB construct a protection group, and have the same virtual nickname and virtual media access control (MAC) address; wherein the virtual nickname is a nickname of the protection group, and the virtual MAC address is a MAC address of the protection group;
when the state of the first RB is active, establishing, by the first RB, a neighbor relationship with another RB other than the second RB through a Hello message according to the virtual MAC address, obtaining network topology information according to the virtual Nickname, and generating and delivering a neighbor check table, a reverse path forwarding RPF table, and a TRILL forwarding table; and
when the state of the first RB is standby, if the second RB is faulty, raising the state of the first RB from standby to active, and notifying another RB in the network of the fault of the second RB so that another RB updates the network topology information, the neighbor check table, the reverse path forwarding RPF table, and the TRILL forwarding table; and generating and delivering, by the first RB, a neighbor check table, a reverse path forwarding RPF table, and a TRILL forwarding table.

In a first implementation form according to the first aspect, wherein the negotiating, by the first RB, with the second RB about the active/standby state specifically includes: negotiating, by the first RB, with the second RB about the active/standby state through an active/standby negotiation protocol, wherein the active/standby negotiation protocol comprises a priority, a virtual Nickname, and a virtual MAC address of an RB.

In a second implementation form according to the first aspect as such or according to the first implementation form of the first aspect, wherein before the negotiating, by the first RB, with the second RB about the active/standby state, the method further includes: establishing, by the first RB, a neighbor relationship with the second RB through a Hello message according to a MAC address of the first RB.

In a third implementation form according to the first aspect as such or according to the first or the second implementation form of the first aspect, the method further includes: when the state of the first RB is active, synchronizing, by the first RB, the network topology information to the second RB so that the second RB generates a neighbor check table, a reverse path forwarding RPF table, and a TRILL forwarding table according to the network topology information.

In a forth implementation form according to the first aspect as such or according to the first or the second implementation form of the first aspect, the method further includes: when the state of the first RB is standby, detecting, by the first RB, whether the second RB is faulty through an extended bidirectional forwarding detection BFD message.

In a second aspect, the present invention provides a router bridge RB in a transparent interconnection of lots of links TRILL network. The RB includes an active/standby negotiating module, a neighbor establishing module, a topology obtaining module, an entry generating and delivering module, and a fault notifying module, where
the active/standby negotiating module is configured to negotiate with a second RB about an active/standby relationship, where the RB and the second RB construct a protection group, and have the same virtual nickname and virtual media access control (MAC) address; wherein the virtual nickname is a nickname of the protection group, and the virtual MAC address is a MAC address of the protection group;
the neighbor establishing module is configured to, when the state of the RB is active, establish a neighbor relationship with another RB other than the second RB through a Hello message according to the virtual MAC address;
the topology obtaining module is configured to, when the state of the RB is active, obtain network topology information according to the virtual Nickname;
the entry generating and delivering module is configured to generate and deliver a neighbor check table, a reverse path forwarding RPF table, and a TRILL forwarding table; and
the fault notifying module is configured to, when the state of the RB is standby and the second RB is faulty, update the state of the RB to be active and notify another RB in the network of the fault of the active node.

In a first implementation form according to the second aspect, wherein the active/standby negotiating module is specifically configured to negotiate with the second RB about the active/standby state through an active/standby negotiation protocol, wherein the active/standby negotiation protocol comprises a priority, a virtual Nickname, and a virtual MAC address of an RB. In a second implementation form according to the second aspect as such or according to the first implementation form of the second aspect, the neighbor establishing module is further configured to establish a neighbor relationship with the second RB through a Hello message according to a MAC address of the RB.

In a third implementation form according to the second aspect as such or according to any of the preceding implementation forms of the second aspect, the RB further includes: a topology synchronizing module, configured to, when the state of the RB is active, synchronize the network topology information to the second RB.

In a third aspect, the present invention provides a system for transparent interconnection of lots of links TRILL network protection, where the system includes a first router bridge RB and a second RB. The first RB and the second RB construct a protection group, and have the same virtual nickname and virtual media access control (MAC) address, wherein the virtual nickname is a nickname of the protection group, and the virtual MAC address is a MAC address of the protection group; where
the first RB is configured to negotiate with the second RB about an active/standby state, and when the state of the first RB is active, establish a neighbor relationship with another RB other than the second RB through a Hello message according to the virtual MAC address, obtain network topology information according to the virtual Nickname, and generate and deliver a neighbor check table, a reverse path forwarding RPF table, and a TRILL forwarding table; and
the second RB is configured to negotiate with the first RB about the active/standby state, and when the state of the second RB is standby, if the first RB is faulty, raise the state from standby to active, notify another RB in the network of the fault of the first RB, and generate and deliver a neighbor check table, a reverse path forwarding RPF table, and a TRILL forwarding table.

With the technical solutions provided in the embodiments of the present invention, the first RB and the second RB share the virtual Nickname and the virtual MAC address, negotiate the active/standby relationship, and construct a protection group. The active RB node, through the TRILL protocol, obtains the network topology and generates a forwarding path to perform forwarding of a data packet. When the active RB node is faulty, the state of the standby RB node is raised to be active and the data packet is forwarded through the standby RB node, so that the time for fault recovery is shortened, and the service is restored rapidly, thereby improving the performance of the TRILL network.

### BRIEF DESCRIPTION OF THE DRAWINGS

FIG. 1 is a flow chart of a method for TRILL network protection according to an embodiment of the present invention;
FIG. 2 is a block diagram of an apparatus of a router bridge RB according to an embodiment of the present invention;
FIG. 3 is a block diagram of a system for TRILL network protection according to an embodiment of the present invention.

### DETAILED DESCRIPTION OF THE EMBODIMENTS

In order to make the foregoing objectives, features, and advantages of the embodiments of the present invention more obvious and comprehensible, the embodiments of the present invention are further described in detail in the following with reference to accompanying drawings and specific implementation manners.

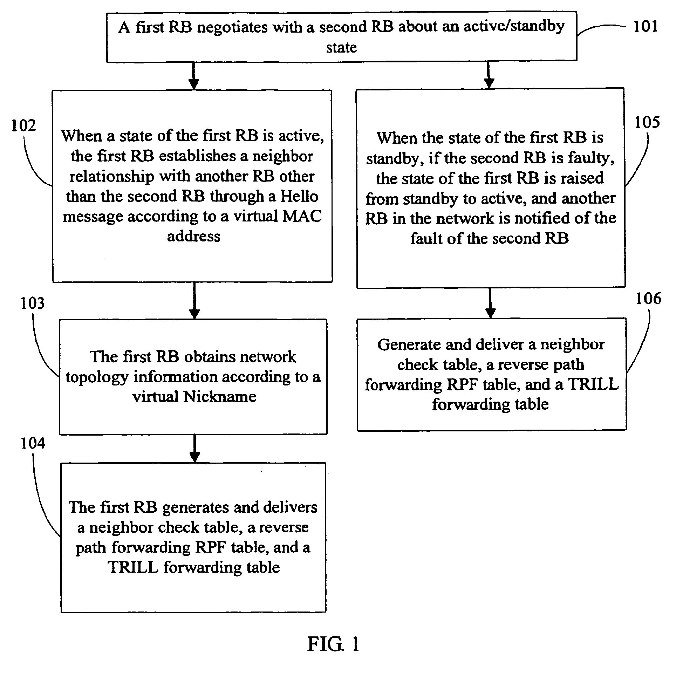

Referring to FIG. 1, it is a flow chart of a method for TRILL network protection according to an embodiment of the present invention. The method includes:
101: A first router bridge RB negotiates with a second RB about an active/standby state, where the first RB and the second RB have the same virtual nickname and virtual media access control (MAC) address.

Optionally, before 101, the first RB and the second RB are configured with the virtual Nickname and the virtual MAC address, for example, Nickname_Group, and MAC_Group.

Before 101, the first RB establishes a neighbor relationship with the second RB through an extended Hello message according to a MAC address of the first RB. Specifically, the first RB sends a first Hello message, where the first Hello packet includes the MAC address, for example, MAC1, of the first RB, and the virtual Nickname, and the virtual MAC address; and receives a second Hello message sent by the second RB, where the second Hello packet includes a MAC address, for example, MAC2, of the second RB, and the virtual Nickname and the virtual MAC address. After multiple interactions, the neighbor relationship is established between the first RB and the second RB.

The first RB negotiates with the second RB about the active/standby state through an active-standby negotiation protocol, for example, an extended IS-IS or BPDU, where the active-standby negotiation protocol includes a priority, a virtual Nickname, and a virtual MAC address of an RB. The first RB may carry the virtual MAC address through extending a type length value (Type Length Value, abbreviated as TLV) in the IS-IS.

The active-standby negotiation protocol may further include a MAC address of an RB.

Specifically, first, the negotiation is performed according to a priority of the first RB and a priority of the second RB, and the RB with a higher priority is active. If the priority of the first RB and that of the second RB are the same, the negotiation is then performed according to a MAC of the first RB and a MAC of the second RB, and the RB with a larger MAC address is active.

If the state of the first RB is active after the negotiation, 102 to 104 are performed. If the state of the first RB is standby after the negotiation, 105 to 106 are performed. After the negotiation, the RB in an active state is also called an active RB node, and the RB in a standby state is also called a standby RB node.

102: The first RB, namely, the active RB node, establishes a neighbor relationship with another RB other than the second RB through a Hello message according to the virtual MAC address.

The first RB, namely, the active RB node, performs a TRILL protocol interaction with another RB, while the second RB, namely, the standby RB node, does not perform any TRILL protocol interaction with another RB.

Specifically, the first RB, namely, the active RB node, sends a third Hello message, where the third Hello packet includes the virtual MAC address; receives a fourth Hello message sent by another RB, where the fourth Hello packet includes a MAC address of another RB; and establishes the neighbor relationship with another RB after multiple interactions.

103: The first RB, namely, the active RB node, obtains network topology information according to the virtual Nickname.

The first RB, namely, the active RB node, obtains the network topology information of a whole TRILL network through a link state packet (Link State Packet, abbreviated as LSP) of the IS-IS according to the virtual Nickname.

Optionally, the first RB, namely, the active RB node, synchronizes the network topology information to the second RB, namely, the standby RB node.

104: The first RB, namely, the active RB node, generates and delivers a neighbor check table, a reverse path forwarding RPF table, and a TRILL forwarding table.

The first RB, namely, the active RB node, calculates and generates the neighbor check table, the reverse path forwarding RPF table, and the TRILL forwarding table according to obtained network topology information.

The first RB, namely, the active RB node, delivers the neighbor check table, the reverse path forwarding RPF table, and the TRILL forwarding table, and processes and forwards a received data packet according to the tables.

The TRILL forwarding table includes a unicast forwarding table and a multicast forwarding table. 105: If the second RB is faulty, the state of the first RB, namely, the standby RB node, is raised from standby to active, and another RB in the network is notified of the fault of the second RB, namely, the active RB node.

When the state of the first RB is standby and the state of the second RB is active, the first RB, namely, the standby RB node, may detect, through an extended bidirectional forwarding detection (Bidirectional Forwarding Detection, abbreviated as BFD) message, whether the second RB, namely, the active RB node, is faulty. The first RB may also determine whether the second RB is faulty through the Hello message that maintains the neighbor relationship.

If it is detected that the second RB is faulty, the state of the first RB, namely, the standby RB node, is raised to be active, and another RB in the network is notified of the fault of the second RB. Specifically, the first RB may, based on a new type of TLV in the ISIS protocol, carry the virtual Nickname and the virtual MAC address and notify another RB in the network that the second RB, namely, the active RB node, is faulty, so that another RB in the network updates the network topology information, the neighbor check table, the reverse path forwarding RPF table, and the TRILL forwarding table. The first RB establishes a neighbor relationship with another RB through a Hello message according to the virtual MAC address, and then the first RB obtains or updates network topology information according to the virtual Nickname.

The obtaining or updating, by the first RB, namely, the standby RB node, the network topology information according to the virtual Nickname specifically is: if the first RB, namely, the standby RB node, has synchronized the network topology information from the second RB, namely, the active RB node, the first RB updates the network topology information through an LSP of the IS-IS according to the virtual Nickname; and if the first RB, namely, the standby RB node does not synchronize the network topology information from the second RB, namely, the active RB node, the first RB obtains network topology information of the whole TRILL network through an LSP of the IS-IS according to the virtual Nickname.

106: The first RB, namely, the standby RB node, generates and delivers a neighbor check table, a reverse path forwarding RPF table, and a TRILL forwarding table.

The first RB, namely, the standby RB node, generates and delivers the neighbor check table, the reverse path forwarding RPF table, and the TRILL forwarding table according to the network topology information, which ensures that a data packet can be forwarded through the first RB, and the service is restored rapidly after the second RB, namely, the active RB node is faulty, thereby improving the performance of the TRILL network.

The technical solution provided in the embodiment of the present invention not only is applied to a root node of a multicast distribution tree, but also is applied to other important nodes in the TRILL network, for example, a trunk node or a leaf node.

With the technical solution provided in the embodiment of the present invention, the active RB node and the standby RB node share the virtual Nickname and the virtual MAC address, and construct a protection group. The active RB node, through the TRILL protocol, obtains a network topology and generates a forwarding path to perform forwarding of the data packet. When the active RB node is faulty, the standby RB node is raised to be active and the data packet is forwarded through the standby RB node, so that the time for fault recovery is shortened, and the service is restored rapidly, thereby improving the performance of the TRILL network.

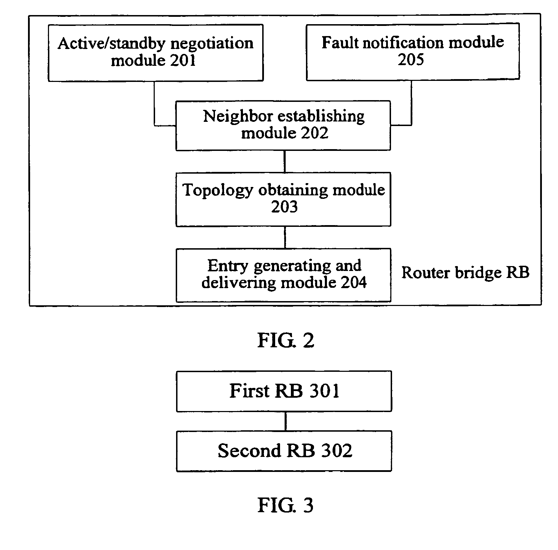

Referring to FIG. 2, it shows a router bridge RB according to an embodiment of the present invention. The RB includes an active/standby negotiating module 201, a neighbor establishing module 202, a topology obtaining module 203, an entry generating and delivering module 204, and a fault notifying module 205.

The active/standby negotiating module 201 is configured to negotiate with a second RB about an active/standby relationship, where the RB and the second RB have the same virtual nickname and virtual media access control (MAC) address.

The neighbor establishing module 202 is configured to, when the state of the RB is active, establish a neighbor relationship with another RB other than the second RB through a Hello message according to the virtual MAC address.

The topology obtaining module 203 is configured to, when the state of the RB is active, obtain network topology information according to the virtual Nickname.

The entry generating and delivering module 204 is configured to generate and deliver a neighbor check table, a reverse path forwarding RPF table, and a TRILL forwarding table.

The fault notifying module 205 is configured to, when the state of the RB is standby and the second RB is faulty, update the state of the RB to be active and notify another RB in the network of the fault of an active node. Specifically, the fault notifying module 205 may, based on a new type of TLV in an ISIS protocol, carry the virtual Nickname and the virtual MAC address and notify another RB in the network that the second RB is faulty, so that another RB in the network updates the network topology information, the neighbor check table, the reverse path forwarding RPF table, and the TRILL forwarding table.

The neighbor establishing module 202 is further configured to establish a neighbor relationship with the second RB through a Hello message according to a MAC address of the RB. Specifically, the neighbor establishing module 202 sends a first Hello message, where the first Hello packet includes the MAC address of the RB, for example, MAC1; receives a second Hello message sent by the second RB, where the second Hello packet includes a MAC address of the second RB, for example, MAC2; and after multiple interactions, establishes the neighbor relationship with the second RB. The active/standby negotiating module 201 is specifically configured to negotiate with the second RB about an active/standby state through an active/standby negotiation protocol, for example, an extended IS-IS or BPDU. The active/standby negotiation protocol includes a priority, a virtual Nickname, and a virtual MAC address of an RB. The active/standby negotiating module 201 first performs negotiation according to a priority of the RB and a priority of the second RB, and the RB with a higher priority is active; and if the priority of the RB and that of the second RB are the same, further performs negotiation according to a MAC of the RB and a MAC of the second RB, and the RB with a larger MAC address is active.

The active/standby negotiation protocol may further include a MAC address of an RB.

The topology obtaining module 203 is specifically configured to, when the state of the RB is active, obtain network topology information of a whole TRILL network through an LSP of the IS-IS according to the virtual Nickname.

The RB may further include:
a topology synchronizing module, configured to, when the state of the RB is active, synchronize the network topology information to the second RB.

The RB may further include:
a fault detecting module, configured to, when the state of the RB is standby, detect whether the second RB is faulty through an extended bidirectional forwarding detection BFD message.

The entry generating and delivering module 204 is specifically configured to generate and deliver the neighbor check table, the reverse path forwarding RPF table, and the TRILL forwarding table according to the network topology information obtained by the topology obtaining module 203. The TRILL forwarding table includes a unicast forwarding table and a multicast forwarding table. Referring to FIG. 3, it is a schematic diagram of a system for TRILL network protection according to an embodiment of the present invention. The system includes a first router bridge RB 301 and a second RB 302. The first RB 301 and the second RB 302 have the same virtual nickname and virtual media access control (MAC) address.

The first RB 301 is configured to negotiate with the second RB 302 about an active/standby state. When the state of the first RB 301 is active, the first RB 301 establishes a neighbor relationship with another RB other than the second RB 302 through a Hello message according to the virtual MAC address, obtains network topology information according to the virtual Nickname, and generates and delivers a neighbor check table, a reverse path forwarding RPF table, and a TRILL forwarding table.

The second RB 302 is configured to negotiate with the first RB 301 about the active/standby state, and when the state of the second RB 302 is standby, if the first RB 301 is faulty, raise the state from standby to active, notify another RB in the network of the fault of the first RB, and generate and deliver a neighbor check table, a reverse path forwarding RPF table, and a TRILL forwarding table. Before the first RB 301 negotiates with the second RB 302 about the active/standby state, the first RB 301 and the second RB 302 are configured with the virtual Nickname and the virtual MAC address.

The first RB 301 and the second RB 302 are further configured to establish a neighbor relationship through an extended Hello message according to their respective MAC address.

The first RB 301 and the second RB 302 are specifically configured to negotiate the active/standby state through an active/standby negotiation protocol, for example, an extended IS-IS or BPDU. The active/standby negotiation protocol includes a priority, a virtual Nickname, and a virtual MAC address of an RB. First, the negotiation is performed according to a priority of the first RB 301 and a priority of the second RB 302, and the RB with a higher priority is active. If the priority of the first RB 301 and that of the second RB 302 are the same, the negotiation is then performed according to a MAC of the first RB 301 and a MAC of the second RB 302, and the RB with a larger MAC address is active.

If after the negotiation, the state of the first RB 301 is active and the state of the second RB 302 is standby, that is, the first RB is an active RB node and the second RB is a standby RB node, the first RB performs a TRILL protocol interaction with another RB, while the second RB does not perform any TRILL protocol interaction with another RB.

When the state of the first RB 301 is active, the first RB 301 is specifically configured to obtain the network topology information of the whole TRILL network through an LSP of the IS-IS according to the virtual Nickname. The first RB 301 is specifically configured to generate and deliver the neighbor check table, the reverse path forwarding RPF table, and the TRILL forwarding table according to the network topology information. The first RB 301 is further configured to process and forward a received data packet according to the neighbor check table, the reverse path forwarding RPF table, and the TRILL forwarding table. Optionally, the first RB 301 synchronizes the network topology information to the second RB 302.

When the state of the second RB 302 is standby, the second RB 302 may detect whether the first RB 301 is faulty through an extended BFD message. The second RB 302 may also determine whether the first RB 301 is faulty through a Hello message that maintains the neighbor relationship. If it is detected that the first RB 301 is faulty, the state of the second RB 302 is raised to be active, and another RB in the network is notified that the first RB 301 is faulty. Specifically, the second RB 302 may, based on a new type of TLV in an ISIS protocol, carry the virtual Nickname and the virtual MAC address and notify another RB in the network that the first RB 301 is faulty, so that another RB in the network updates the network topology information, the neighbor check table, the reverse path forwarding RPF table, and the TRILL forwarding table. The second RB 302 is further configured to establish a neighbor relationship with another RB through a Hello message according to the virtual MAC address. And then the second RB 302 obtains or updates network topology information according to the virtual Nickname, and generates and delivers a neighbor check table, a reverse path forwarding RPF table, and a TRILL forwarding table.

In this way, after the first RB 301 is faulty, a data packet may be forwarded through the second RB 302, and the service is restored rapidly, thereby improving the performance of the TRILL network. The technical solution provided in the embodiment of the present invention not only is applied to a root node of a multicast distribution tree, but also is applied to other important nodes in the TRILL network, for example, a trunk node or a leaf node.

With the technical solution provided in the embodiments of the present invention, the active RB node and the standby RB node share the virtual Nickname and the virtual MAC address, and construct the protection group. The active RB node, through the TRILL protocol, obtains the network topology and generates the forwarding path to perform the forwarding of the data packet. When the active RB node is faulty, the standby RB node is raised to be active and the data packet is forwarded through the standby RB node, so that the time for fault recovery is shortened, thereby solving the problem that in an existing TRILL network when a root RB node is faulty, a long time for fault recovery causes a service interruption and affects network performance.

Persons of ordinary skill in the art may understand that all or a part of steps of the method of the foregoing embodiments may be implemented by a program instructing relevant hardware. The program may be stored in a computer readable storage medium, and the storage medium may be a ROM/RAM, a magnetic disk, or an optical disk and so on.

The foregoing descriptions are merely exemplary embodiments of the present invention, but the protection scope of the present invention is not limited to this. Any modification or replacement that can be easily thought of by persons skilled in the art within the technical scope disclosed in the present invention should fall within the protection scope of the present invention. Therefore, the protection scope of the present invention should be subject to the protection scope of the claims.

## Claims

1. A method for Transparent Interconnection of Lots of Links, TRILL, network protection, comprising:
negotiating (101), by a first router bridge, RB, with a second RB about an active/standby state, wherein the first RB and the second RB construct a protection group, and have the same virtual nickname and virtual media access control, MAC, address; wherein the virtual nickname is a nickname of the protection group, and the virtual MAC address is a MAC address of the protection group;
when the state of the first RB is active, establishing (102), by the first RB, a neighbor relationship with another RB other than the second RB through a Hello message according to the virtual MAC address, obtaining (103) network topology information according to the virtual Nickname, and generating (104) and delivering a neighbor check table, a reverse path forwarding RPF table, and a TRILL forwarding table; and
when the state of the first RB is standby, if the second RB is faulty, raising (105) the state of the first RB from standby to active, and notifying (105) another RB in the network of the fault of the second RB so that another RB updates the network topology information, the neighbor check table, the reverse path forwarding RPF table, and the TRILL forwarding table, and generating and delivering (106), by the first RB, a neighbor check table, a reverse path forwarding RPF table, and a TRILL forwarding table.

2. The method according to claim 1, wherein the negotiating, by the first RB, with the second RB about the active/standby state specifically comprises:
negotiating, by the first RB, with the second RB about the active/standby state through an active/standby negotiation protocol, wherein the active/standby negotiation protocol comprises a priority, a virtual Nickname, and a virtual MAC address of an RB.

3. The method according to claim 1 or 2, wherein before the negotiating, by the first RB, with the second RB about the active/standby state, the method further comprises:
establishing, by the first RB, a neighbor relationship with the second RB through a Hello message according to a MAC address of the first RB.

4. The method according to any one of claims 1 to 3, further comprising:
when the state of the first RB is active, synchronizing, by the first RB, the network topology information to the second RB so that the second RB generates a neighbor check table, a reverse path forwarding RPF table, and a TRILL forwarding table according to the network topology information.

5. The method according to any one of claims 1 to 3, further comprising:
when the state of the first RB is standby, detecting, by the first RB, whether the second RB is faulty through an extended bidirectional forwarding detection BFD message.

6. A router bridge, RB, wherein the RB comprises an active/standby negotiating module, a neighbor establishing module, a topology obtaining module, an entry generating and delivering module, and a fault notifying module, wherein
the active/standby negotiating module (201) is configured to negotiate with a second RB about an active/standby relationship, wherein the RB and the second RB construct a protection group, and have the same virtual nickname and virtual media access control, MAC, address; wherein the virtual nickname is a nickname of the protection group, and the virtual MAC address is a MAC address of the protection group;
the neighbor establishing module (202) is configured to, when the state of the RB is active, establish a neighbor relationship with another RB other than the second RB through a Hello message according to the virtual MAC address;
the topology obtaining module (203) is configured to, when the state of the RB is active, obtain network topology information according to the virtual Nickname;
the entry generating and delivering module (204) is configured to generate and deliver a neighbor check table, a reverse path forwarding RPF table, and a TRILL forwarding table; and
the fault notifying module (205) is configured to, when the state of the RB is standby and the second RB is faulty, update the state of the RB to be active and notify another RB in the network of the fault of an active node.

7. The RB according to claim 6, wherein the active/standby negotiating module is specifically configured to negotiate with the second RB about the active/standby state through an active/standby negotiation protocol, wherein the active/standby negotiation protocol comprises a priority, a virtual Nickname, and a virtual MAC address of an RB.

8. The RB according to claim 6 or 7, wherein the neighbor establishing module is further configured to establish a neighbor relationship with the second RB through a Hello message according to a MAC address of the RB.

9. The RB according to any one of claims 6 to 8, further comprising:
a topology synchronizing module, configured to, when the state of the RB is active, synchronize the network topology information to the second RB.

10. A system for Transparent Interconnection of Lots of Links, TRILL, network protection, wherein the system comprises a first router bridge RB and a second RB, and the first RB and the second RB construct a protection group, and have the same virtual nickname and virtual media access control, MAC, address, wherein the virtual nickname is a nickname of the protection group, and the virtual MAC address is a MAC address of the protection group; wherein
the first RB is configured to negotiate with the second RB about an active/standby state, and when the state of the first RB is active, establish a neighbor relationship with another RB other than the second RB through a Hello message according to the virtual MAC address, obtain network topology information according to the virtual Nickname, and generate and deliver a neighbor check table, a reverse path forwarding RPF table, and a TRILL forwarding table; and
the second RB is configured to negotiate with the first RB about the active/standby state, and when the state of the second RB is standby, if the first RB is faulty, raise the state from standby to active, notify another RB in the network of the fault of the first RB, and generate and deliver a neighbor check table, a reverse path forwarding RPF table, and a TRILL forwarding table.

## Patentansprüche

1. Verfahren für "Transparent Interconnection of Lots of Links"(TRILL)-Netzwerkschutz, welches umfasst:
Verhandeln (101), durch eine erste "Router Bridge", RB, mit einer zweiten RB über einen aktiven/Bereitschaftszustand, wobei die erste RB und die zweite RB eine Schutzgruppe bilden und denselben virtuellen Nickname und dieselbe virtuelle Medienzugriffssteuerungs(MAC)-Adresse haben; wobei der virtuelle Nickname ein Nickname der Schutzgruppe ist und die virtuelle MAC-Adresse eine MAC-Adresse der Schutzgruppe ist;
wenn der Zustand der ersten RB "aktiv" ist, Herstellen (102), durch die erste RB, einer Nachbarschaftsbeziehung mit einer anderen RB, die von der zweiten RB verschieden ist, durch eine Hello-Nachricht entsprechend der virtuellen MAC-Adresse, Gewinnen (103) von Netzwerktopologieinformationen entsprechend dem virtuellen Nickname und Erzeugen (104) und Liefern einer Nachbarschafts-Prüftabelle, einer Rückwärtspfad-Weiterleitungs(RPF)-Tabelle und einer TRILL-Weiterleitungstabelle; und
wenn der Zustand der ersten RB "Bereitschaft" ist, falls die zweite RB fehlerbehaftet ist, Erhöhen (105) des Zustands der ersten RB von "Bereitschaft" auf "aktiv" und Benachrichtigen (105) einer anderen RB in dem Netzwerk über den Fehler der zweiten RB, so dass eine andere RB die Netzwerktopologieinformationen, die Nachbarschafts-Prüftabelle, die Rückwärtspfad-Weiterleitungs-(RPF)Tabelle und die TRILL-Weiterleitungstabelle aktualisiert, und Erzeugen und Liefern (106), durch die erste RB, einer Nachbarschafts-Prüftabelle, einer Rückwärtspfad-Weiterleitungs(RPF)-Tabelle und einer TRILL-Weiterleitungstabelle.

2. Verfahren nach Anspruch 1, wobei das Verhandeln, durch die erste RB, mit der zweiten RB über den aktiven/Bereitschaftszustand insbesondere umfasst:
Verhandeln, durch die erste RB, mit der zweiten RB über den aktiven/Bereitschaftszustand durch ein Aktiv/Bereitschafts-Verhandlungsprotokoll, wobei das Aktiv/Bereitschafts-Verhandlungsprotokoll eine Priorität, einen virtuellen Nickname und eine virtuelle MAC-Adresse einer RB umfasst.

3. Verfahren nach Anspruch 1 oder 2, wobei vor dem Verhandeln, durch die erste RB, mit der zweiten RB über den aktiven/Bereitschaftszustand das Verfahren ferner umfasst:
Herstellen, durch die erste RB, einer Nachbarschaftsbeziehung mit der zweiten RB durch eine Hello-Nachricht entsprechend einer MAC-Adresse der ersten RB.

4. Verfahren nach einem der Ansprüche 1 bis 3, welches ferner umfasst:
wenn der Zustand der ersten RB "aktiv" ist, Synchronisieren, durch die erste RB, der Netzwerktopologieinformationen mit der zweiten RB, so dass die zweite RB eine Nachbarschafts-Prüftabelle, eine Rückwärtspfad-Weiterleitungs-(RPF)Tabelle und eine TRILL-Weiterleitungstabelle entsprechend den Netzwerktopologieinformationen erzeugt.

5. Verfahren nach einem der Ansprüche 1 bis 3, welches ferner umfasst:
wenn der Zustand der ersten RB "Bereitschaft" ist, Detektieren, durch die erste RB, ob die zweite RB fehlerbehaftet ist, durch eine erweiterte Nachricht zur Detektion der bidirektionalen Weiterleitung, BFD.

6. "Router Bridge", RB, wobei die RB ein Aktiv/Bereitschafts-Verhandlungsmodul, ein Nachbarschaftsbeziehungs-Herstellungsmodul, ein Topologiegewinnungsmodul, ein Eintragserzeugungs- und -liefermodul und ein Fehlerbenachrichtigungsmodul umfasst, wobei
das Aktiv/Bereitschafts-Verhandlungsmodul (201) dafür ausgebildet ist, mit einer zweiten RB über eine Aktiv/Bereitschafts-Beziehung zu verhandeln, wobei die RB und die zweite RB eine Schutzgruppe bilden und denselben virtuellen Nickname und dieselbe virtuelle Medienzugriffssteuerungs(MAC)-Adresse haben; wobei der virtuelle Nickname ein Nickname der Schutzgruppe ist und die virtuelle MAC-Adresse eine MAC-Adresse der Schutzgruppe ist;
das Nachbarschaftsbeziehungs-Herstellungsmodul (202) dafür ausgebildet ist, wenn der Zustand der RB "aktiv" ist, eine Nachbarschaftsbeziehung mit einer anderen RB, die von der zweiten RB verschieden ist, durch eine Hello-Nachricht entsprechend der virtuellen MAC-Adresse herzustellen;
das Topologiegewinnungsmodul (203) dafür ausgebildet ist, wenn der Zustand der RB "aktiv" ist, Netzwerktopologieinformationen entsprechend dem virtuellen Nickname zu gewinnen;
das Eintragserzeugungs- und -liefermodul (204) dafür ausgebildet ist, eine Nachbarschafts-Prüftabelle, eine Rückwärtspfad-Weiterleitungs-(RPF)Tabelle und eine TRILL-Weiterleitungstabelle zu erzeugen und zu liefern; und
das Fehlerbenachrichtigungsmodul (205) dafür ausgebildet ist, wenn der Zustand der RB "Bereitschaft" ist und die zweite RB fehlerbehaftet ist, den Zustand der RB zu aktualisieren, so dass er "aktiv" ist, und eine andere RB in dem Netzwerk über den Fehler eines aktiven Knotens zu benachrichtigen.

7. RB nach Anspruch 6, wobei das AktivBereitschafts-Verhandlungsmodul insbesondere dafür ausgebildet ist, mit der zweiten RB über den aktiven/Bereitschaftszustand durch ein Aktiv/Bereitschafts-Verhandlungsprotokoll zu verhandeln, wobei das Aktiv/Bereitschafts-Verhandlungsprotokoll eine Priorität, einen virtuellen Nickname und eine virtuelle MAC-Adresse einer RB umfasst.

8. RB nach Anspruch 6 oder 7, wobei das Nachbarschaftsbeziehungs-Herstellungsmodul ferner dafür ausgebildet ist, eine Nachbarschaftsbeziehung mit der zweiten RB durch eine Hello-Nachricht entsprechend einer MAC-Adresse der RB herzustellen.

9. RB nach einem der Ansprüche 6 bis 8, welche ferner umfasst:
ein Topologiesynchronisierungsmodul, das dafür ausgebildet ist, wenn der Zustand der RB "aktiv" ist, die Netzwerktopologieinformationen mit der zweiten RB zu synchronisieren.

10. System für "Transparent Interconnection of Lots of Links" (TRILL)-Netzwerkschutz, wobei das System eine erste "Router Bridge", RB, und eine zweite RB umfasst und die erste RB und die zweite RB eine Schutzgruppe bilden und denselben virtuellen Nickname und dieselbe virtuelle Medienzugriffssteuerungs(MAC)-Adresse haben, wobei der virtuelle Nickname ein Nickname der Schutzgruppe ist und die virtuelle MAC-Adresse eine MAC-Adresse der Schutzgruppe ist; wobei
die erste RB dafür ausgebildet ist, mit der zweiten RB über einen aktiven/Bereitschaftszustand zu verhandeln, und wenn der Zustand der ersten RB "aktiv" ist, eine Nachbarschaftsbeziehung mit einer anderen RB, die von der zweiten RB verschieden ist, durch eine Hello-Nachricht entsprechend der virtuellen MAC-Adresse herzustellen, Netzwerktopologieinformationen entsprechend dem virtuellen Nickname zu gewinnen und eine Nachbarschafts-Prüftabelle, eine Rückwärtspfad-Weiterleitungs-(RPF)Tabelle und eine TRILL-Weiterleitungstabelle zu erzeugen und zu liefern; und
die zweite RB dafür ausgebildet ist, mit der ersten RB über den aktiven/Bereitschaftszustand zu verhandeln, und wenn der Zustand der zweiten RB "Bereitschaft" ist, falls die erste RB fehlerbehaftet ist, den Zustand von "Bereitschaft" auf "aktiv" zu erhöhen, eine andere RB in dem Netzwerk über den Fehler der ersten RB zu benachrichtigen und eine Nachbarschafts-Prüftabelle, eine Rückwärtspfad-Weiterleitungs-(RPF)Tabelle und eine TRILL-Weiterleitungstabelle zu erzeugen und zu liefern.

## Revendications

1. Procédé de protection de réseau à Interconnexion Transparente d'un Grand Nombre de Liaisons, TRILL (Transparent Interconnection of Lots of Links), comprenant :
la négociation (101), par un premier pont routeur, RB (Router Bridge), avec un second RB d'un état actif/d'attente, dans lequel le premier RB et le second RB construisent un groupe de protection, et ont le même pseudonyme virtuel et la même adresse de contrôle d'accès au support, MAC (Media Access Control), virtuelle ; dans lequel le pseudonyme virtuel est un pseudonyme du groupe de protection et l'adresse MAC virtuelle est une adresse MAC du groupe de protection ;
lorsque l'état du premier RB est l'état actif, l'établissement (102), par le premier RB, d'une relation de voisinage avec un autre RB autre que le second RB par l'intermédiaire d'un message Hello conformément à l'adresse MAC virtuelle, l'obtention (103) d'informations de topologie de réseau conformément au Pseudonyme virtuel, et la génération (104) et la fourniture d'une table de vérification de voisinage, d'une table de réacheminement de trajet inverse, RPF (Reverse Path Forwarding), et d'une table de réacheminement TRILL ; et
lorsque l'état du premier RB est l'état d'attente, si le second RB est défectueux, le passage (105) de l'état du premier RB d'attente à l'état actif, et la notification (105) à un autre RB dans le réseau du défaut du second RB de manière à ce qu'un autre RB mette à jour les informations de topologie de réseau, la table de vérification de voisinage, la table de réacheminement de trajet inverse RPF et la table de réacheminement TRILL, et la génération et la fourniture (106), par le premier RB, d'une table de vérification de voisinage, d'une table de réacheminement de trajet inverse RPF et d'une table de réacheminement TRILL.

2. Procédé selon la revendication 1, dans lequel la négociation, par le premier RB, avec le second RB de l'état actif/d'attente comprend plus précisément :
la négociation, par le premier RB, avec le second RB, de l'état actif/d'attente au moyen d'un protocole de négociation d'état actif/d'attente, dans lequel le protocole de négociation d'état actif/d'attente comprend une priorité, un Pseudonyme virtuel et une adresse MAC virtuelle d'un RB.

3. Procédé selon la revendication 1 ou 2, dans lequel avant la négociation, par le premier RB, avec le second RB de l'état actif/d'attente, le procédé comprend en outre :
l'établissement, par le premier RB, d'une relation de voisinage avec le second RB par l'intermédiaire d'un message Hello conformément à une adresse MAC du premier RB.

4. Procédé selon l'une quelconque des revendications 1 à 3, comprenant en outre :
lorsque l'état du premier RB est l'état actif, la synchronisation, par le premier RB, des informations de topologie de réseau avec le second RB de manière à ce que le second RB génère une table de vérification de voisinage, une table de réacheminement de trajet inverse RPF, et une table de réacheminement TRILL conformément aux informations de topologie de réseau.

5. Procédé selon l'une quelconque des revendications 1 à 3, comprenant en outre :
lorsque l'état du premier RB est l'état d'attente, la détection, par le premier RB, du fait de savoir si le second RB est défectueux par l'intermédiaire d'un message étendu de détection de réacheminement bidirectionnel BFD (Bidirectional Forwarding Detection).

6. Pont routeur, RB, dans lequel le RB comprend un module de négociation d'état actif/d'attente, un module d'établissement de voisinage, un module d'obtention de topologie, un module générateur et fournisseur d'entrée, et un module de notification de défaut, dans lequel
le module de négociation d'état actif/d'attente (201) est configuré pour négocier avec un second RB une relation d'état actif/d'attente, dans lequel le RB et le second RB construisent un groupe de protection, et possèdent le même pseudonyme virtuel et la même adresse de contrôle d'accès au support, MAC, virtuelle ; dans lequel le pseudonyme virtuel est un pseudonyme du groupe de protection et l'adresse MAC virtuelle est une adresse MAC du groupe de protection ;
le module d'établissement de voisinage (202) est configuré, lorsque l'état du RB est l'état actif, pour établir une relation de voisinage avec un autre RB autre que le second RB par l'intermédiaire d'un message Hello conformément à l'adresse MAC virtuelle ;
le module d'obtention de topologie (203) est configuré, lorsque l'état du RB est l'état actif, pour obtenir des informations de topologie de réseau conformément au Pseudonyme virtuel ;
le module générateur et fournisseur d'entrée (204) est configuré pour générer et fournir une table de vérification de voisinage, une table de réacheminement de trajet inverse RPF, et une table de réacheminement TRILL ; et
le module de notification de défaut (205) est configuré, lorsque l'état du RB est l'état d'attente et lorsque le second RB est défectueux, pour mettre à jour l'état du RB afin qu'il soit actif, et notifier à un autre RB dans le réseau du défaut d'un noeud actif.

7. RB selon la revendication 6, dans lequel le module de négociation d'état actif/d'attente est spécifiquement configuré pour négocier avec le second RB l'état actif/d'attente par l'intermédiaire d'un protocole de négociation d'état actif/d'attente, dans lequel le protocole de négociation d'état actif/d'attente comprend une priorité, un Pseudonyme virtuel et une adresse MAC virtuelle d'un RB.

8. RB selon la revendication 6 ou 7, dans lequel le module d'établissement de voisinage est en outre configuré pour établir une relation de voisinage avec le second RB par l'intermédiaire d'un message Hello conformément à une adresse MAC du RB.

9. RB selon l'une quelconque des revendications 6 à 8, comprenant en outre :
un module de synchronisation de topologie, configuré, lorsque l'état du RB est l'état actif, pour synchroniser les informations de topologie de réseau avec le second RB.

10. Système de protection de réseau par Interconnexion Transparente d'un Grand Nombre de Liaisons, TRILL, dans lequel le système comprend un premier pont routeur, RB, et un second RB, et le premier RB et le second RB construisent un groupe de protection, et ont le même pseudonyme virtuel et la même adresse de contrôle d'accès au support, MAC, virtuelle, dans lequel le pseudonyme virtuel est un pseudonyme du groupe de protection et l'adresse MAC virtuelle est une adresse MAC du groupe de protection ; dans lequel
le premier RB est configuré pour négocier avec le second RB un état actif/d'attente, et lorsque l'état du premier RB est l'état actif, pour établir une relation de voisinage avec un autre RB autre que le second RB par l'intermédiaire d'un message Hello conformément à l'adresse MAC virtuelle, pour obtenir des informations de topologie de réseau conformément au Pseudonyme virtuel, et pour générer et fournir une table de vérification de voisinage, une table de réacheminement de trajet inverse RPF, et une table de réacheminement TRILL ; et
le second RB est configuré pour négocier avec le premier RB l'état actif/d'attente et, lorsque l'état du second RB est l'état d'attente, si le premier RB est défectueux, pour faire passer l'état d'attente à l'état actif, pour notifier à un autre RB dans le réseau du défaut du premier RB, et pour générer et fournir une table de vérification de voisinage, une table de réacheminement de trajet inverse RPF et une table de réacheminement TRILL.
